# FASCICULE DE BREVET EUROPEEN

(11) **EP 4 038 130 B1**
(45) Date de publication et mention de la délivrance du brevet: **07.06.2023**
(21) Numéro de dépôt: 21819876.0
(22) Date de dépôt: 30.11.2021
(51) Int. Cl.: C08J 3/20, C08J 5/18

(54) **FILM POLYMÈRE COMPOSITE ET SON UTILISATION DANS UN VÉHICULE SPATIAL**
POLYMERVERBUNDFOLIE UND IHRE VERWENDUNG IN EINEM RAUMFAHRZEUG
COMPOSITE POLYMER FILM AND USE THEREOF IN A SPACECRAFT

(30) Priorité: 02.12.2020 FR 2012557
(43) Date de publication de la demande: 10.08.2022
(73) Titulaire: Airbus Defence and Space SAS, 31402 Toulouse Cedex 4 (FR)
(72) Inventeur: ESTRADA, Elisabeth, 31402 Toulouse cedex 4 (FR); CHEVALIER, Mathieu, 31402 Toulouse cedex 4 (FR); QUIROGA, Luis Enrique, 31402 Toulouse cedex 4 (FR)
(74) Mandataire: Ipside
(86) Numéro de dépôt international: PCT/EP2021/083653
(87) Numéro de publication internationale: WO 2022/117593

(56) Documents cités:
- WO-A2-2013/013070
- US-A1- 2007 020 450

## Description

La présente invention s'inscrit dans le domaine des matériaux mis en oeuvre dans les véhicules spatiaux.

Plus particulièrement, la présente invention concerne l'utilisation, dans un véhicule spatial, d'un film polymère composite à base d'une charge carbonée dispersée dans une matrice polymère, ainsi qu'un film polymère composite destiné à une telle utilisation et un véhicule spatial contenant un tel film polymère composite.

Les véhicules spatiaux, en particulier les satellites, sont soumis en opération dans l'espace à des conditions extrêmement contraignantes qui requièrent, notamment pour assurer un bon fonctionnement des instruments qu'ils transportent, des propriétés très spécifiques tant sur le plan optique que sur le plan thermique pour certains des éléments qui les constituent. Dans certains cas, ces propriétés visent notamment à obtenir, d'une part, une réduction la plus importante possible des rayonnements optiques parasites susceptibles de perturber le fonctionnement des équipements, et, d'autre part, un contrôle thermique passif le meilleur possible au sein du satellite.

Certains des composants qui sont mis en oeuvre dans les satellites doivent ainsi être spécifiquement conçus pour participer à l'obtention de telles performances optiques et/ou thermiques.

A l'heure actuelle, ces performances sont assurées par mise en oeuvre, à différents endroits du satellite, notamment en tant que couche de surface des matelas d'isolation thermique ou en tant que baffle d'instrument optique, de films de polyimide souples colorés en noir dans la masse, présentant à la fois l'ensemble des caractéristiques suivantes : une forte capacité d'absorption ou une très faible capacité de réflexion des rayonnements parasites et du rayonnement solaire, de sorte à assurer que l'intensité des rayonnements parasite et solaire réfléchis soit très faible, et une émissivité infrarouge (IR) élevée permettant un fort niveau d'échange d'énergie par radiation.

A titre de tels films, dits films polymères noirs, on peut citer les films commercialisés par la société Dupont de Nemours sous la dénomination Kapton^{®} Noir type XC ou CB. Ces films présentent un niveau de performance optique et thermique particulièrement adapté aux exigences du domaine spatial, notamment une réflexion spectrale R, dans le spectre visible et dans le proche infrarouge, plus particulièrement dans l'intervalle de 380 à 1680 nm, inférieure à 9%, une absorptivité du rayonnement solaire αₛ supérieure à 0,93 et une émissivité normale εₙ supérieure à 0,84.

La présente invention vise à proposer une solution alternative aux films polymères noirs proposés par l'art antérieur, en proposant un film polymère présentant des propriétés de réflexion spectrale, absorptivité du rayonnement solaire et émissivité aussi bonnes, voire meilleures, que celles indiquées ci-dessus, et qui puisse être utilisé au sein d'un véhicule spatial en remplacement de ces films de l'art antérieur afin d'y contribuer au contrôle thermique passif et optique du véhicule spatial.

Des objectifs supplémentaires de l'invention sont que ce film soit léger, facile à fabriquer et facile à manipuler, et qu'il soit bien entendu résistant aux températures auxquelles il est susceptible d'être soumis dans l'espace.

Il a été découvert par les présents inventeurs que ces objectifs sont atteints par mise en oeuvre, au sein d'une matrice d'un polymère de type thermoplastique particulier, de taux spécifiques de types de charges carbonées déterminés.

Ainsi, selon un premier aspect, l'invention concerne l'utilisation, dans un véhicule spatial, en particulier dans un satellite, d'un film polymère composite formé d'une matrice polymère comprenant un polymère thermoplastique choisi parmi les polyaryléthercétones (PAEK), matrice dans laquelle est dispersée, de manière sensiblement homogène, une charge carbonée choisie parmi :
- les nanotubes de carbone, qui sont alors présents dans le film polymère composite dans une première teneur comprise entre 0,5 et 10 % en poids par rapport au poids total du film polymère composite,
- le noir de carbone nanométrique, qui est alors présent dans le film polymère composite dans une deuxième teneur comprise entre 5 et 30 % en poids par rapport au poids total du film polymère composite,
- ou l'un quelconque de leurs mélanges, la teneur de chacun dans le film polymère composite étant alors pondérée par sa proportion dans le mélange. On entend par là que, lorsque la charge carbonée est un mélange de nanotubes de carbone et de noir de carbone nanométrique, la teneur en les nanotubes de carbone dans le film polymère composite est une proportion de ladite première teneur qui est égale à la proportion de nanotubes de carbone dans le mélange, et la teneur en noir de carbone nanométrique dans le film polymère composite est une proportion de ladite deuxième teneur qui est égale à la proportion de noir de carbone nanométrique dans le mélange. Ainsi, si, à titre d'exemple, la charge carbonée est un mélange contenant 60 % en poids de nanotubes de carbone et 40 % en poids de noir de carbone nanométrique, alors la teneur de nanotubes de carbone dans le film polymère composite sera fixée à 60 % de ladite première teneur (comprise entre 0,5 et 10 % en poids), et la teneur de noir de carbone nanométrique dans le film polymère composite sera fixée à 40 % de ladite deuxième teneur (comprise entre 5 et 30 % en poids).

La présence de nanotubes de carbone dans le film polymère composite, même en petite quantité, confère à ce dernier une capacité de conduction électrique, qui peut s'avérer avantageuse pour certaines applications. Ainsi, dans des modes de mise en oeuvre particulièrement avantageux de l'invention, la charge carbonée est constituée soit uniquement de nanotubes de carbone, soit d'un mélange de noir de carbone nanométrique et de nanotubes de carbone, le noir de carbone nanométrique pouvant être largement majoritaire dans ce mélange. Préférentiellement, les nanotubes de carbone et le noir de carbone nanométrique sont les seules charges carbonées présentes dans le film polymère composite.

Le film polymère composite peut autrement contenir, à titre de charge carbonée, des nanofibres de carbone, seules ou en mélange avec des nanotubes de carbone et/ou du noir de carbone nanométrique. Les nanofibres de carbone, lorsqu'elles y sont seules, peuvent être présentes dans le film polymère composite dans une teneur comprise entre 0,5 et 30 % en poids par rapport au poids total du film polymère composite, de préférence entre 1 et 20 %, de préférence encore entre 5 et 15 %, en poids par rapport au poids total du film polymère composite.

Le noir de carbone est un produit obtenu industriellement par décomposition thermique ou par combustion incomplète de composés carbone-hydrogène. Il se présente classiquement sous forme de particules de morphologie bien définie à faible teneur en impuretés. Par noir de carbone nanométrique, on entend dans la présente description du noir de carbone constitué de particules primaires dont au moins une dimension est nanométrique, c'est-à-dire comprise entre 0,1 et 100 nm. Les dimensions de ces particules peuvent être mesurées par granulométrie laser, microscopie électronique à balayage ou microscopie électronique en transmission, avec analyse morphologique. Les particules de noir de noir de carbone mises en oeuvre selon l'invention peuvent être sous forme d'agglomérats.

A titre de noir de carbone nanométrique utilisable selon l'invention on peut notamment citer le produit commercialisé sous la dénomination Printex^{®} 80 par la société Orion Engineered Carbons.

Préférentiellement, le noir de carbone nanométrique mis en oeuvre dans le film polymère composite de l'invention est constitué de particules primaires dont au moins une dimension, mesurée par granulométrie laser, est inférieure ou égale à 20 nm, et plus particulièrement comprise entre 0,1 et 20 nm.

Les nanotubes de carbone sont quant à eux des structures carbonées tubulaires creuses composées d'un ou plusieurs feuillets d'atome de carbone enroulés sur eux-mêmes. Les nanotubes de carbone présentent typiquement un diamètre moyen compris entre 0,4 et 100 nm. Préférentiellement, les nanotubes de carbone mis en oeuvre selon l'invention présentent un diamètre moyen inférieur ou égal à 20 nm, de préférence compris entre 10 et 15 nm, ce diamètre pouvant être mesuré par granulométrie laser ou microscopie électronique à transmission. Les nanotubes de carbone mis en oeuvre selon l'invention peuvent être aussi bien de type simple-paroi que multi-parois.

A titre d'exemple de nanotubes de carbone pouvant être utilisés selon l'invention, on peut citer le produit commercialisé par la société Arkema sous la dénomination Graphistrength^{®} C100.

De manière plus générale, la charge carbonée, qu'il s'agisse de nanotubes de carbone ou de noir de carbone nanométrique, est préférentiellement constituée de particules dont au moins une dimension est comprise entre 10 et 15 nm.

Le film polymère composite répondant à la composition préconisée selon l'invention est opaque, coloré en noir dans la masse, et il présente avantageusement des performances optiques et thermiques qui le rendent tout à fait adapté pour une utilisation au sein d'un véhicule destiné à être opéré dans l'espace. Il présente notamment une réflexion spectrale R inférieure à 9% dans l'intervalle de 380 à 1680 nm, une absorptivité du rayonnement solaire αₛ supérieure à 0,93 et une émissivité normale εₙ supérieure à 0,84.

Le film polymère composite utilisé selon l'invention présente préférentiellement une épaisseur comprise entre 25 et 80 µm, par exemple une épaisseur de 25 µm, 40 µm ou 80 µm. Cette épaisseur est avantageusement en adéquation avec les exigences d'épaisseur pour les films polymères noirs mis en oeuvre dans les véhicules spatiaux. Dans cette gamme d'épaisseur, le film est souple, léger, avec une densité d'environ 1,3 à 1,4, et il présente de très bonnes propriétés, au moins aussi bonnes que celles des films polymères noirs proposés par l'art antérieur pour cette application, et ce dans une très large plage de température, en particulier grâce aux caractéristiques des matériaux qui le constituent, notamment du polymère choisi dans la famille particulière des PAEK.

Préférentiellement, la teneur en charge carbonée dans le film polymère composite est choisie pour être la plus basse possible, tout en assurant les propriétés optiques et thermiques visées, de sorte à faciliter sa fabrication.

Ainsi, les nanotubes de carbone, en particulier lorsqu'ils constituent la seule charge carbonée dispersée dans la matrice polymère, sont de préférence contenus dans le film composite polymère dans une teneur comprise entre 0,5 et 5 %, de préférence entre 0,5 et 3 %, de préférence encore entre 1 et 3 %, préférentiellement entre 1,5 et 3 %, et préférentiellement encore entre 2 et 3 %, en poids par rapport au poids total du film composite polymère. Ils peuvent autrement être contenus dans le film composite polymère dans une teneur comprise entre 0,5 et 10 % en poids par rapport au poids total du film composite polymère.

La teneur en noir de carbone nanométrique dans le film polymère composite, en particulier lorsque le noir de carbone y constitue la seule charge carbonée, est quant à elle de préférence comprise entre 5 et 20 %, de préférence encore comprise entre 5 et 10 %, en poids par rapport au poids total du film polymère composite.

Pour chacune de ces charges carbonées, plus les fourchettes de teneur indiquées ci-dessus sont étroites, et meilleur est le compromis obtenu entre propriétés optiques et thermiques visées d'une part, et poids/épaisseur du film polymère composite d'autre part.

Des teneurs en charge carbonée supérieures à 10 % en poids pour les nanotubes de carbone, et supérieures à 30 % en poids pour le noir de carbone nanométrique, entrent également dans le cadre de l'invention, bien que moins avantageuses pour une utilisation du film polymère composite dans un véhicule spatial.

L'invention peut en outre répondre à l'une ou plusieurs des caractéristiques décrites ci-après, mises en oeuvre isolément ou en chacune de leurs combinaisons techniquement opérantes.

Chacune de ces caractéristiques augmente avantageusement les performances optiques et/ou thermiques du film composite polymère utilisé dans le véhicule spatial selon l'invention.

Dans le film polymère composite utilisé selon l'invention, la matrice peut être formée d'un unique polymère, ou d'un mélange de polymères, chacun étant de préférence choisi parmi les polyaryléthercétones.

Dans des modes de mise en oeuvre particuliers de l'invention, le polymère compris dans la matrice est choisi parmi les poly-éther-éther-cétones (PEEK), les poly-éther-cétone-cétones (PEKK), les poly-éther-éther-cétone-cétones (PEEKK), les poly-éther-cétones (PEK) et les poly-éther-cétone-éther-cétone-cétones (PEKEKK), ou l'un quelconque de leurs mélanges.

La matrice polymère comprend de préférence, et est préférentiellement constituée de, un poly-éther-cétone-cétone (PEKK) et/ou un poly-éther-éther-cétone PEEK.

Dans des modes de mise en oeuvre préférés de l'invention, le polymère compris dans la matrice, et notamment constituant la matrice, est un poly-éther-cétone-cétone à motifs monomères téréphtaloyle et motifs monomères isophtaloyle.

Préférentiellement, ce polymère est alors tel que le rapport (T/I) entre les fractions de téréphtaloyle et les fractions d'isophtaloyle utilisées pendant sa synthèse, est égal à 70/30. De tels polymères, de structure semi-cristalline, présentent avantageusement une bonne processabilité, notamment par les techniques classiques d'extrusion.

Des exemples de tels polymères sont ceux de la série 7000 commercialisés sous la dénomination Kepstan^{®} par la société Arkema.

Lorsque la matrice est formée de plusieurs polymères, un mélange de différents PEKK, de préférence chacun à motifs monomères téréphtaloyle et motifs monomères isophtaloyle, est particulièrement préféré.

La matrice polymère du film polymère composite utilisé selon l'invention peut ainsi par exemple, dans des modes de réalisation particulièrement préférés, être formée de deux poly-éther-cétone-cétones à motifs monomères téréphtaloyle et motifs monomères isophtaloyle, dont les rapports T/I entre fractions de téréphtaloyle et fractions d'isophtaloyle sont différents.

Un mélange de tels polymères, présentant respectivement des rapports T/I de 70/30 et 60/40, peut par exemple être mis en oeuvre selon l'invention.

Préférentiellement, lorsque la matrice est formée d'un mélange de plusieurs polymères, le film composite contient au moins 55 % en poids, par rapport au poids total du film polymère composite, de PEKK à motifs monomères téréphtaloyle et motifs monomères isophtaloyle de rapport T/I égal à 70/30.

Le film polymère composite utilisé selon l'invention peut contenir un ou plusieurs additifs, de préférence en quantité inférieure ou égale à 1 % en poids par rapport au poids total du film polymère composite. De tels additifs peuvent par exemple être choisis parmi les charges métalliques électriquement conductrices, thermiquement conductrices, etc.

Le film polymère composite selon l'invention peut être obtenu par toute méthode classique en elle-même.

Il peut par exemple être obtenu par thermopressage d'un mélange du polymère et de la charge carbonée.

Dans des modes de mise en oeuvre particulièrement adaptés à une fabrication industrielle, le film polymère composite est obtenu par un procédé comprenant une étape d'extrusion d'un mélange du polymère et de la charge carbonée et une étape de calandrage de la matière obtenue à l'issue de cette étape d'extrusion.

Le procédé peut comprendre une étape préalable de mélange, par exemple dans une extrudeuse, notamment une extrudeuse bi-vis co-rotative, de la charge carbonée avec une première quantité de polymère, de sorte à former par compoundage des granulés composites, qui sont mélangés à la quantité restante de polymère lors de l'étape d'extrusion du procédé.

Cette étape d'extrusion peut être réalisée de toute manière et au moyen de tout dispositif connus de l'homme du métier. Il entre dans les compétences de celui-ci d'en déterminer les paramètres opératoires, en particulier le profil de température de chauffage à appliquer, spécifiquement pour chaque polymère / mélange de polymères donné.

De même, l'étape de calandrage peut être réalisée de toute manière classique en elle-même.

Cette étape de calandrage peut être suivie d'une étape d'étirage / filmage de la matière, pour former un film de l'épaisseur souhaitée.

Le film polymère composite peut le cas échéant ensuite être soumis à une étape de délaizage, puis optionnellement d'enroulement pour le présenter sous forme de bobine à la largeur souhaitée.

L'ensemble de ces étapes est classique, et ne sera pas décrit de manière détaillée dans la présente description.

Le film polymère composite peut être mis en oeuvre dans le véhicule spatial de différentes manières, et au niveau de différents composants.

Il peut aussi bien former une couche, notamment une couche de surface, d'un élément multicouches, que constituer en lui-même un élément monocouche, le cas échéant assemblé sur une structure mécanique.

Le film polymère composite peut par exemple être collé sous forme de patches sur une surface du véhicule spatial, pour rendre cette surface localement noire. Dans des modes de mises en oeuvre particuliers de l'invention, le film composite polymère forme une couche externe d'un élément d'isolation multicouche du véhicule spatial, en particulier d'un matelas d'isolation thermique, également nommé couverture isolante ou isolation multicouche (MLI, pour l'anglais MultiLayer Isolation). Ses propriétés optiques et thermiques évitent notamment avantageusement les réflexions solaires parasites qui sont susceptibles de créer des points chauds et/ou de perturber des instruments de mesures optiques.

Dans des modes de mise en oeuvre particuliers de l'invention, le film polymère composite constitue, sous forme de monocouche, un baffle d'un instrument optique du véhicule spatial.

Selon un autre aspect, l'invention concerne un véhicule spatial, en particulier un satellite, contenant un film polymère composite, d'épaisseur de préférence comprise entre 25 et 80 µm, formé d'une matrice polymère comprenant un polymère thermoplastique choisi parmi les polyaryléthercétones, matrice dans laquelle est dispersée une charge carbonée choisie parmi :
- les nanotubes de carbone, qui sont alors présents dans le film polymère composite dans une première teneur comprise entre 0,5 et 10 % en poids par rapport au poids total du film polymère composite,
- le noir de carbone nanométrique, qui est alors présent dans le film polymère composite dans une deuxième teneur comprise entre 5 et 30 % en poids par rapport au poids total du film polymère composite,
- ou l'un quelconque de leurs mélanges, la teneur de chacun dans le film polymère composite étant alors pondérée par sa proportion dans le mélange. Ce film polymère composite peut répondre à l'une ou plusieurs, selon toute combinaison, des caractéristiques concernant le film polymère composite décrites ci-avant en référence à l'utilisation selon l'invention.

Ce film polymère composite est particulièrement adapté à une mise en oeuvre, en tant que film polymère noir à hautes performances optiques et thermiques, dans un véhicule spatial.

Ce film peut par exemple constituer une couche externe d'un matelas d'isolation thermique formé d'une pluralité de couches de feuilles polymères, ces feuilles étant par exemple formées à base de polyester, polyimide ou polyaryléthercétone. Il peut également constituer un baffle d'un instrument optique du véhicule spatial.

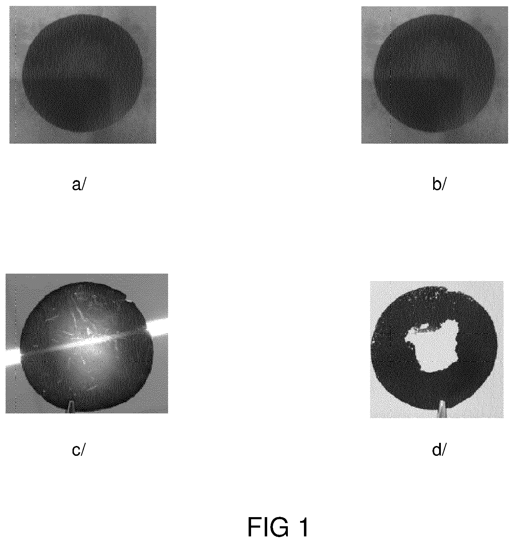

Les caractéristiques et avantages de l'invention apparaîtront plus clairement à la lumière des exemples de mise en oeuvre ci-après, fournis à simple titre illustratif et nullement limitatifs de l'invention, avec l'appui de la figure 1, qui montre des photographies d'échantillons de films polymères composites formés à partir d'un polymère de type PEKK et d'une charge carbonée, cette charge carbonée étant : en a/, des nanotubes de carbone (film conforme à l'invention) ; en b/, du noir de carbone nanométrique (film conforme à l'invention) ; en c/, du noir de carbone non nanométrique (film non conforme à l'invention) ; en d/, du graphène (film non conforme à l'invention).

### Exemple 1

### Matériels et méthodes

Dans cet exemple, sont mis en oeuvre les produits commerciaux suivants :
- polymère de type PEKK à motifs téréphtaloyle et isophtaloyle : Kepstan^{®} 6004 (rapport T/I = 60/40) ;
- polymère de type PEKK à motifs téréphtaloyle et isophtaloyle : Kepstan^{®} 7003 (rapport T/I = 70/30) ;
- nanotubes de carbone : Graphistrength^{®} C100 (poudre d'agglomérats de nanotubes multi-parois (environ 12 parois), longueur d'environ 1 µm et diamètre d'environ 12 nm ;
- noir de carbone nanométrique : Printex^{®} 80 (taille de particule moyenne 16 nm, BET 225 m²/g) ;
- noir de carbone non nanométrique : noir de carbone « glassy » sous forme de particules sphériques de Sigma-Aldrich (diamètre de particules entre 2 et 12 µm) ;
- graphène : Av-Plat-40 (Avanzare Innovacion Tecnologica) (taille 40 µm, épaisseur 10 nm, nombre de couches inférieur à 30, BET 22 m²/g).

Des films à base de ces polymères et de ces charges carbonées respectives sont préparés de la façon suivante.

Le(s) polymère(s) sous forme de granulés et la charge carbonée sont mélangés, dans les proportions respectives indiquées dans le tableau 1 ci-après, dans une extrudeuse bi-vis co-rotative, à une température comprise entre 330 et 380 °C, de sorte à former un mélange maître sous forme de granulés de longueur 5 mm et de diamètre 3 mm.

Des films sont formés à partir de ces granulés dans une presse chauffante, à une pression de 10 à 15 bars. La température de chauffage est comprise entre 360 et 375 °C, elle est maintenue pendant une durée de 10 min. Différentes épaisseurs des films, comprises entre 30 et 100 µm, sont réalisées. Les films formés sont ensuite refroidis sous air à 22 °C/min.

Lorsque la charge carbonée est le noir de carbone non nanométrique ou le graphène, le procédé diffère dans ses premières étapes : la charge carbonée est mélangée au polymère sous forme de granulés dans un bain d'éthanol, sous ultrasons, puis l'éthanol est éliminé par évaporation au moyen d'un évaporateur rotatif, et le mélange pulvérulent homogène ainsi obtenu est soumis au traitement avec presse chauffante décrit ci-avant, pour obtenir les films visés.

Les différents paramètres caractéristiques des films obtenus sont mesurés comme suit :
- l'épaisseur des films est mesurée au moyen d'un micromètre ;
- l' absorptivité solaire α_{S} est mesurée avec un réflectomètre portable SOC 410-SOLAR muni d'un filament de tungstène (source) et d'une sphère intégrante. La mesure est réalisée dans la gamme de longueur d'onde entre 330 et 2500 nm, sous un angle d'incidence de 20° ;
- l'émissivité normale εₙ est mesurée avec un émissomètre-réflectomètre portable TEMP 2000A dans la gamme de longueur d'onde entre 3 et 30 µm, conformément à la norme ASTM E408 ;
- la réflexion spectrale R est mesurée au moyen d'un spectrophotomètre UV-VIS-NIR muni d'une sphère intégrante, entre 380 et 1680 nm, avec un intervalle de mesure de 1 nm.

### Résultats

Le tableau 1 ci-après indique les caractéristiques obtenues pour chacun des films formés à base de nanotubes de carbone. Les différentes proportions des constituants des films y sont indiquées en % en poids, par rapport au poids total du film.

**Tableau 1**

| Film | A1 | A2 | A3 | A4 |
|---|---|---|---|---|
| Kepstan^{®} 7003 (%) | 68,5 | 47,4 | 30,5 | 0 |
| Kepstan^{®} 6004 (%) | 29 | 48,4 | 63,9 | 92 |
| Nanotubes de carbone (%) | 2,5 | 4,2 | 5,6 | 8 |
| Epaisseur du film (µm) | 70-90 | 80 | 70-90 | 30-100 |
| α_{S} | 0,94 | 0,94 | 0,94 | 0,93-0,94 |
| εₙ | 0,93 | 0,93 | 0,93 | 0,90-0,91 |

Le tableau 2 ci-après indique les caractéristiques obtenues pour chacun des films formés à base de noir de carbone nanométrique. Les différentes proportions des constituants des films y sont indiquées en % en poids, par rapport au poids total du film.

**Tableau 2**

| Film | B1 | B2 | B3 | B4 |
|---|---|---|---|---|
| Kepstan^{®} 7003 (%) | 93,1 | 86,5 | 80,2 | 74,1 |
| Noir de carbone nanométrique (%) | 6,9 | 13,5 | 19,8 | 25,9 |
| Epaisseur du film (µm) | 50 | 55 | 45-80 | 60 |
| α_{S} | 0,93 | 0,93 | 0,92-0,94 | 0,93 |
| εₙ | 0,93 | 0,92 | 0,86-0,89 | 0,84 |

Les films A et B, dont la composition est conforme à celle préconisée par l'invention, présentent des propriétés d'absorptivité solaire et d'émissivité normale tout à fait compatibles avec une utilisation en tant que film polymère noir dans un véhicule spatial.

Une observation visuelle montre que ces films présentent un coloration noire homogène dans tout leur volume, comme on peut le voir sur la figure 1, en a/ pour le film A1 et en b/ pour le film B1. Ceci témoigne d'une dispersion très homogène de la charge carbonée dans la matrice polymère. Ces films sont en outre faciles à manipuler.

En comparaison, des films polymères composites ont été préparés en utilisant d'autres types de charge carbonée :
- Film C : noir de carbone non nanométrique (83,4 % p/p de Kepstan^{®} 7003 et 16,6 % p/p de noir de carbone non nanométrique) ;
- Film D : graphène (83,3 % p/p de Kepstan^{®} 7003 et 16,7 % p/p de graphène). Le film C est semi-transparent, comme on l'observe clairement en c/ sur la figure 1. Ses capacités d'absorptivité solaire et d'émissivité normale sont largement inférieures au niveau préconisé pour une application en tant que film polymère noir dans le domaine spatial. Le film D quant à lui, visible en d/ sur la figure 1, est cassant, irrégulier avec des trous, et par conséquent nullement utilisable.

### Exemple 2

Dans cet exemple, des films conformes à l'invention sont fabriqués par un procédé industriel, à partir des mêmes matières premières que décrit dans l'exemple 1.

Le protocole appliqué est schématiquement le suivant : un mélange maître contenant la charge carbonée et une partie du polymère, sous forme de granulés de longueur 5 mm et de diamètre 3 mm, est tout d'abord préparé par compoundage dans une extrudeuse bi-vis co-rotative (mélange maître à environ 24 % en poids de charge carbonée lorsque la charge carbonée est le noir de carbone nanométrique, et à 8 % en poids de charge carbonée lorsque la charge carbonée est formée des nanotubes de carbone).

Le mélange maître ainsi obtenu est ensuite mélangé à la quantité restante de polymère, puis le mélange est soumis à extrusion-calandrage, pour former une nappe qui est ensuite soumise aux étapes successives suivantes : étirage pour former un film de l'épaisseur souhaitée (dans cet exemple, trois épaisseurs : 25 µm, 40 µm, 80 µm sont obtenues), délaizage pour obtenir une largeur de film de 380 mm, et bobinage.

Les compositions des différents films formés sont indiquées dans le tableau 3 ci-dessous. Dans ce tableau, les différentes proportions des constituants des films sont indiquées en % en poids, par rapport au poids total du film.

**Tableau 3**

| Film | NTC1 | NTC2 | NTC3 | NCN1 | NCN2 | NCN3 |
|---|---|---|---|---|---|---|
| Kepstan^{®} 7003 (%) | 75 | 63 | 56 | 95 | 93,5 | 90 |
| Kepstan^{®} 6004 (%) | 23 | 34 | 40,5 | - | - | - |
| Nanotubes de carbone (%) | 2 | 3 | 3,5 | - | - | - |
| Noir de carbone nanométrique (%) | - | - | - | 5 | 6,5 | 10 |

L'ensemble de ces films présentent visuellement une coloration noire homogène dans leur volume. Ils présentent de bonnes propriétés mécaniques, une densité entre 1,3 et 1,4, et ils sont faciles à manipuler.

Les caractéristiques optiques et thermiques de chacun de ces films sont indiquées dans le tableau 4 ci-après.

**Tableau 4**

| Film | Epaisseur (µm) | α_{S} | εₙ | R (%) |
|---|---|---|---|---|
| NTC1 | 25 | 0,93 | 0,92 | 6,9<R<8,2 |
| | 40 | 0,93 | 0,92 | 6,9<R<8,1 |
| | 80 | - | - | - |
| NTC2 | 25 | 0,93 | 0,92 | 6,8<R<8,1 |
| | 40 | 0,93 | 0,92 | 6,9<R<8,1 |
| | 80 | 0,93 | 0,91 | 6,7<R<7,9 |
| NTC3 | 25 | - | - | - |
| | 40 | - | - | - |
| | 80 | 0,93 | 0,91 | 6,6<R<8,1 |
| NCN1 | 25 | 0,93 | 0,91 | 7,2<R<8,6 |
| | 40 | 0,93 | 0,91 | 7,3<R<8,7 |
| | 80 | 0,93 | 0,92 | 7,1<R<8,6 |
| NCN2 | 25 | 0,93 | 0,91 | 7,3<R<8,9 |
| | 40 | 0,93 | 0,91 | 7,2<R<8,8 |
| | 80 | 0,93 | 0,92 | 7,2<R<8,6 |
| NCN3 | 25 | 0,93 | 0,92 | 7,3<R<8,9 |
| | 40 | 0,93 | 0,91 | 7,3<R<8,7 |
| | 80 | 0,93 | 0,91 | 7,1<R<8,7 |

Comme on peut l'observer, pour chacun de ces films conformes à l'invention l'ensemble des valeurs des paramètres évalués est conforme aux exigences du domaine spatial concernant les films polymères noirs qui y sont mis en oeuvre.

## Revendications

1. Utilisation dans un véhicule spatial d'un film polymère composite formé d'une matrice polymère comprenant un polymère choisi parmi les polyaryléthercétones, dans laquelle est dispersée une charge carbonée choisie parmi :
- les nanotubes de carbone, présents dans ledit film polymère composite dans une première teneur comprise entre 0,5 et 10 % en poids par rapport au poids total dudit film polymère composite,
- le noir de carbone nanométrique, présents dans ledit film polymère composite dans une deuxième teneur comprise entre 5 et 30 % en poids par rapport au poids total dudit film polymère composite,
- ou l'un quelconque de leurs mélanges, la teneur de chacun dans le film polymère composite étant alors pondérée par sa proportion dans le mélange.

2. Utilisation selon la revendication 1, dans laquelle ledit film polymère composite présente une épaisseur comprise entre 25 et 80 µm.

3. Utilisation selon l'une des revendications 1 ou 2, dans laquelle ladite première teneur, de nanotubes de carbone dans le film polymère composite, est comprise entre 0,5 et 5 %, de préférence entre 0,5 et 3 %, en poids par rapport au poids total dudit film polymère composite.

4. Utilisation selon l'une des quelconques des revendications 1 à 3, dans laquelle ladite deuxième teneur, de noir de carbone nanométrique dans le film polymère composite, est comprise entre 5 et 10 % en poids par rapport au poids total dudit film polymère composite.

5. Utilisation selon l'une quelconque des revendications 1 à 4, dans laquelle ledit polymère est choisi parmi les poly-éther-éther-cétones, les poly-éther-cétone-cétones, les poly-éther-éther-cétone-cétones, les poly-éther-cétones ou les poly-éther-cétone-éther-cétone-cétones et leurs mélanges.

6. Utilisation selon la revendication 5, dans laquelle ledit polymère est un poly-éther-cétone cétone à motifs monomères téréphtaloyle et motifs monomères isophtaloyle.

7. Utilisation selon la revendication 6, dans laquelle ledit polymère présente un rapport entre les fractions de téréphtaloyle et les fractions d'isophtaloyle égal à 70/30.

8. Utilisation selon l'une quelconque des revendications 1 à 7, dans laquelle ledit noir de carbone nanométrique est constitué de particules dont au moins une dimension, mesurée par granulométrie laser, est inférieure ou égale à 20 nm.

9. Utilisation selon l'une quelconque des revendications 1 à 8, dans laquelle ledit film polymère composite est obtenu par un procédé comprenant une étape d'extrusion d'un mélange dudit polymère et de ladite charge carbonée et une étape de calandrage de la matière obtenue à l'issue de ladite étape d'extrusion.

10. Utilisation selon l'une quelconque des revendications 1 à 9, dans laquelle ledit film polymère composite forme une couche externe d'un élément d'isolation multicouche dudit véhicule spatial.

11. Utilisation selon l'une quelconque des revendications 1 à 10, dans laquelle ledit film polymère composite constitue un baffle d'un instrument optique dudit véhicule spatial.

12. Véhicule spatial contenant un film polymère composite, **caractérisé en ce que** ledit film polymère composite est formé d'une matrice polymère comprenant un polymère choisi parmi les polyaryléthercétones, dans laquelle est dispersée une charge carbonée choisie parmi :
- les nanotubes de carbone, présents dans ledit film polymère composite dans une première teneur comprise entre 0,5 et 10 % en poids par rapport au poids total dudit film polymère composite,
- le noir de carbone nanométrique, présent dans ledit film polymère composite dans une teneur comprise entre 5 et 30 % en poids par rapport au poids total dudit film polymère composite,
- ou l'un quelconque de leurs mélanges, la teneur de chacun dans le film polymère composite étant alors pondérée par sa proportion dans le mélange.

13. Véhicule spatial selon la revendication 12, dans lequel ledit film polymère composite présente une épaisseur comprise entre 25 et 80 µm.

14. Véhicule spatial selon la revendication 12 ou 13, dans lequel le film polymère composite constitue une couche externe d'un matelas d'isolation thermique formé d'une pluralité de couches de feuilles polymères.

15. Véhicule spatial selon l'une des revendications 12 à 14, dans lequel le film polymère composite constitue un baffle d'un instrument optique dudit véhicule spatial.

## Patentansprüche

1. Verwendung in einem Raumfahrzeug eines polymeren Verbundfilms, der aus einer Polymermatrix gebildet wird, die ein aus Polyaryletherketonen ausgewähltes Polymer umfasst und in der ein kohlenstoffhaltiger Füllstoff dispergiert ist, der ausgewählt ist aus:
- Kohlenstoffnanoröhren, die in dem polymeren Verbundfilm in einem ersten Gehalt zwischen 0,5 und 10 Gew.-%, in Bezug auf das Gesamtgewicht des polymeren Verbundfilms, vorhanden sind,
- nanometrischem Ruß, der in dem polymeren Verbundfilm in einem zweiten Gehalt zwischen 5 und 30 Gew.-%, in Bezug auf das Gesamtgewicht des polymeren Verbundfilms, vorhanden ist,
- oder einem beliebigen Gemisch davon, wobei der Gehalt jedes einzelnen in dem polymeren Verbundfilm nach seinem Anteil an dem Gemisch gewichtet wird.

2. Verwendung nach Anspruch 1, wobei der polymere Verbundfilm eine Dicke zwischen 25 und 80 µm aufweist.

3. Verwendung nach einem der Ansprüche 1 oder 2, wobei der erste Gehalt an Kohlenstoffnanoröhren in dem polymeren Verbundfilm zwischen 0,5 und 5 Gew.-%, vorzugsweise zwischen 0,5 und 3 Gew.-%, in Bezug auf das Gesamtgewicht des polymeren Verbundfilms, beträgt.

4. Verfahren nach einer der Ansprüche 1 bis 3, wobei der zweite Gehalt an nanometrischem Ruß in dem polymeren Verbundfilm zwischen 5 und 10 Gew.-%, in Bezug auf das Gesamtgewicht des polymeren Verbundfilms, beträgt.

5. Verwendung nach einem der Ansprüche 1 bis 4, wobei das Polymer ausgewählt ist aus Polyetheretherketonen, Polyetherketonketonen, Polyetheretherketonketonen, Polyetherketonen oder Polyetherketonetherketonketonen und Gemischen davon.

6. Verwendung nach Anspruch 5, wobei das Polymer ein Polyetherketonketon mit Terephthaloyl-Monomereinheiten und Isophthaloyl-Monomereinheiten ist.

7. Verwendung nach Anspruch 6, wobei das Polymer ein Verhältnis von Terephthaloyl-Anteilen zu Isophthaloyl-Anteilen von 70/30 aufweist.

8. Verwendung nach einem der Ansprüche 1 bis 7, wobei der nanometrische Ruß aus Partikeln besteht, bei denen mindestens eine Größe, gemessen durch Lasergranulometrie, kleiner oder gleich 20 nm ist.

9. Verwendung nach einem der Ansprüche 1 bis 8, wobei der polymere Verbundfilm durch ein Verfahren erhalten wird, das einen Schritt der Extrusion eines Gemisches aus dem Polymer und dem kohlenstoffhaltigen Füllstoff und einen Schritt der Kalandrierung des am Ende des Extrusionsschritts erhaltenen Materials umfasst.

10. Verwendung nach einem der Ansprüche 1 bis 9, wobei der polymere Verbundfilm eine äußere Schicht eines mehrschichtigen Isolationselements des Raumfahrzeugs bildet.

11. Verwendung nach einem der Ansprüche 1 bis 10, wobei der polymere Verbundfilm eine Schallwand eines optischen Instruments des Raumfahrzeugs bildet.

12. Raumfahrzeug, das einen polymeren Verbundfilm enthält, **dadurch gekennzeichnet, dass** der polymere Verbundfilm aus einer Polymermatrix gebildet wird, die ein Polymer umfasst, das aus Polyaryletherketonen ausgewählt ist, in der ein kohlenstoffhaltiger Füllstoff dispergiert ist, der ausgewählt ist aus:
- Kohlenstoffnanoröhren, die in dem polymeren Verbundfilm in einem ersten Gehalt zwischen 0,5 und 10 Gew.-%, in Bezug auf das Gesamtgewicht des polymeren Verbundfilm, vorhanden sind,
- nanometrischem Ruß, der in dem polymeren Verbundfilm in einem Anteil zwischen 5 und 30 Gew.-%, in Bezug auf das Gesamtgewicht des polymeren Verbundfilms, vorhanden ist,
- oder einem beliebigen Gemisch davon, wobei der Gehalt jedes einzelnen in dem polymeren Verbundfilm nach seinem Anteil in dem Gemisch gewichtet wird.

13. Raumfahrzeug nach Anspruch 12, wobei der polymere Verbundfilm eine Dicke zwischen 25 und 80 µm aufweist.

14. Raumfahrzeug nach Anspruch 12 oder 13, wobei der polymere Verbundfilm eine äußere Schicht einer wärmeisolierenden Matte bildet, die aus einer Vielzahl von Schichten aus polymeren Folien gebildet ist.

15. Raumfahrzeug nach einem der Ansprüche 12 bis 14, wobei der polymere Verbundfilm eine Schallwand eines optischen Instruments des Raumfahrzeugs bildet.

## Claims

1. A use in a spacecraft of a composite polymeric film formed by a polymeric matrix comprising a polymer selected from polyaryletherketones, in which is dispersed a carbon filler selected from:
- carbon nanotubes, present in said composite polymeric film in a first content of between 0.5 and 10% by weight based on the total weight of said composite polymeric film,
- nanosized carbon black, present in said composite polymeric film in a second content of between 5 and 30% by weight based on the total weight of said composite polymeric film,
- or any mixture thereof, the content of each of which in the composite polymeric film being then weighted by its proportion in the mixture.

2. The use according to claim 1, wherein said composite polymeric film has a thickness of between 25 and 80 µm.

3. The use according to one of claims 1 or 2, wherein said first content, of carbon nanotubes in the composite polymeric film, is between 0.5 and 5%, preferably between 0.5 and 3%, by weight based on the total weight of said composite polymeric film.

4. The use according to any of claims 1 to 3, wherein said second content, of nanosized carbon black in the composite polymeric film, is between 5 and 10% by weight based on the total weight of said composite polymeric film.

5. The use according to any of claims 1 to 4, wherein said polymer is selected from poly-ether-ether-ketones, poly-ether-ketone-ketones, poly-ether-ether-ketone-ketones, poly-ether-ketones or poly-ether-ketone-ether-ketone-ketones and mixtures thereof.

6. The use according to claim 5, wherein said polymer is a poly-ether-ketone ketone with terephthaloyl monomer units and isophthaloyl monomer units.

7. The use according to claim 6, wherein said polymer has a ratio of the terephthaloyl fractions to the isophthaloyl fractions equal to 70/30.

8. The use according to any of claims 1 to 7, wherein said nanosized carbon black consists of particles one dimension of which, measured by laser granulometry, is lower than or equal to 20 nm.

9. The use according to any of claims 1 to 8, wherein said composite polymeric film is obtained by a method comprising a step of extruding a mixture of said polymer and said carbon filler and a step of calendering the material obtained at the end of said extrusion step.

10. The use according to any of claims 1 to 9, wherein said composite polymeric film forms an outer layer of a multilayer insulation element of said spacecraft.

11. The use according to any of claims 1 to 10, wherein said composite polymeric film constitutes a baffle of an optical instrument of said spacecraft.

12. A spacecraft containing a composite polymeric film, **characterised in that** said composite polymeric film is formed by a polymeric matrix comprising a polymer selected from polyaryletherketones, in which is dispersed a carbon filler selected from:
- carbon nanotubes, present in said composite polymeric film in a first content of between 0.5 and 10% by weight based on the total weight of said composite polymeric film,
- nanosized carbon black, present in said composite polymeric film in a second content of between 5 and 30% by weight based on the total weight of said composite polymeric film,
- or any mixture thereof, the content of each of which in the composite polymeric film being then weighted by its proportion in the mixture.

13. The spacecraft according to claim 12, wherein said composite polymeric film has a thickness of between 25 and 80 pm.

14. The spacecraft according to claim 12 or 13, wherein the composite polymeric film constitutes an outer layer of a thermal insulation blanket formed by a plurality of layers of polymeric sheets.

15. The spacecraft according to one of claims 12 to 14, wherein the composite polymeric film constitutes a baffle of an optical instrument of said spacecraft.
